# EUROPÄISCHE PATENTSCHRIFT

(11) **EP 0 794 000 B1**
(45) Veröffentlichungstag und Bekanntmachung des Hinweises auf die Patenterteilung: **04.12.2002**
(21) Anmeldenummer: 97103218.0
(22) Anmeldetag: 27.02.1997
(51) Int. Cl.: B01J 3/04, C04B 40/02

(54) **Verfahren zum Trocknen von Beschickungsgut während seiner Druckdampfbehandlung in einem Autoklav und Autoklav hierfür**
Process for the drying of baten material during the pressurised vapour treatment thereof in an autoclave and autoclave therefor
Procédé pour le séchage d'une charge pendant son traitement de vapeur sous pression dans une autoclave et autoclave pour la mise en oeuvre

(30) Priorität: 08.03.1996 DE 19608974
(43) Veröffentlichungstag der Anmeldung: 10.09.1997
(73) Patentinhaber: Rheinische Baustoffwerke GmbH, 50416 Köln (DE)
(72) Erfinder: Peifer, Herman Josef, Dr., 52072 Aachen (DE); Weitzel, Johannes, Dipl.-Ing., 52072 Aachen (DE); Minkenberg, Hans, Dr., 60487 Frankfurt/Main (DE); Wosnitza, Franz, Prof. Dr., 52080 Aachen (DE)

(56) Entgegenhaltungen:
- EP-A- 0 133 239
- EP-A- 0 538 756
- DE-B- 3 010 337
- US-A- 3 327 032
- US-A- 3 687 598

## Beschreibung

Die Erfindung betrifft ein Verfahren zum Trocknen von Beschikkungsgut während seiner Druckdampfbehandlung in einem Autoklav nach dem Oberbegriff des Anspruchs 1 und einen Autoklav nach dem Oberbegriff des Anspruchs 5.

Aus EP 0 538 756 B1 ist ein Autoklav zur Druckdampfbehandlung von Beschickungsgut, etwa Rohlingen aus Porenbeton oder Schaumsilikat, mit einem von einem Autoklavmantel umschlossenen, im wesentlichen horizontalen zylindrischen Innenraum und mit einer zur Erzeugung von überhitztem Wasserdampf dienenden Heizeinrichtung bekannt, deren Wärmetauscher in den seitlichen Bereichen des Innenraums angeordnet und mit einem Kamin versehen ist, so daß sich eine umlaufende freie Konvektions-Strömung ergibt. Bei vorhandenen Autoklaven ist das Raumangebot für die optimale Lage und Größe der Wärmetauscher im Hinblick auf eine homogene Trocknung unter Einbehaltung der zulässigen Scheitel/Sohle-Temperaturdifferenz nicht in allen Fällen vorhanden. Bei neu einzurichtenden Autoklaven führt dies zu einer entsprechenden Dimensionierung.

Aufgabe der Erfindung ist es, ein Verfahren und einen Autoklav nach den Oberbegriffen der Ansprüche 1 und 5 zu schaffen, die es ermöglichen, eine möglichst homogene Temperaturverteilung im Beschickungsgut während des Trocknens zu erhalten.

Diese Aufgabe wird entsprechend dem kennzeichnenden Teil des Anspruchs 1 bzw. 5 gelöst.

Hierbei wird der zur Trocknung erforderliche Energietransport vom Heizmedium zum Beschickungsgut mit Hilfe einer Zwangskonvektion in überhitzter Dampfatmosphäre gewährleistet, wobei der Antrieb der Zwangskonvektion über an einen Treibdampfverdichter angeschlossene Dampfejektoren erfolgt. Während der im wesentlichen isobaren Trocknungsphase von beispielsweise 12 bar wird zum Betreiben der Dampfejektoren dem Autoklav ein Teilvolumenstrom Wasserdampf entnommen, der gegenüber dem im Autoklav für die Trocknung umgewälzten Volumen klein ist, vorzugsweise ein Verhältnis von 1:5 bis 1:20 besitzt, so daß der für die Zwangsumwälzung im Autoklav erforderliche Energieaufwand gering gehalten wird. Dieser Teilvolumenstrom wird in einem innerhalb oder außerhalb des Autoklavs befindlichen Treibdampfverdichter (etwa ein Brüdengebläse) auf ein etwas erhöhtes Druckniveau verdichtet. Dieses Druckniveau liegt vorzugsweise um etwa 100 bis 900 mbar höher als der in der Trocknungsphase vorgesehene Autoklavendruck, ist aber entsprechend dem Verhältnis von entnommenem Teilvolumenstrom zum umgewälzten Volumen relativ hoch. Dieser Treibdampf wird dann über die in den seitlichen Bereichen des Innenraums angeordneten Dampfejektoren lateral gleichmäßig verteilt infolge der Druckdifferenz so eingedüst, daß aufgrund der hohen Ausströmgeschwindigkeit des Treibdampfes von beispielsweise 70 bis 200 m/s Wasserdampf aus der Umgebung mitgerissen und das so aus Treibdampf und Umgebungswasserdampf (Saugdampfstrom) gebildete Dampfgemisch als Dampfstrom, der ein Vielfaches des Treibdampfvolumenstroms betragen kann, bis unter das Beschikkungsgut geführt wird.

Dadurch, daß der Treibdampf über die jeweiligen Austrittsöffnungen im wesentlichen senkrecht nach unten in den Autoklav einströmt, kann der Sohlenbereich des Autoklavs auf der gewünschten Temperatur gehalten werden und das Beschickungsgut wird von unten nach oben durchströmt. Infolge der im Vergleich zu einer Naturkonvektion erheblich größeren umgewälzten Dampfmengen sinkt bei gleicher Trocknungsleistung die absolute überhitzungstemperatur und die Temperaturspreizung zwischen Ein- und Auslaß des Wärmetauschers. Hierdurch erfolgt eine homogenere Trocknung zwischen den verschiedenen Lagen des Beschickungsgutes sowie eine veringerte Scheitel/Sohle-Temperaturdifferenz.

Die Verwendung der Dampfejektoren führt außerdem dazu, daß sie zum einen ihre zentrale Anordnung zum Beschickungsgut ermöglichen, wodurch eine weitgehend homogene Trocknung entlang der Längsachse des Autoklavs gewährleistet wird, und zum anderen nur ein Bruchteil der insgesamt umgewälzten Dampfmenge durch ein Kanal- oder Rohrsystem und über einen (meachnischen oder thermischen) Treibdampfverdichter geführt werden muß.

Die Zahl und Anordnung der Dampfejektoren im Autoklav kann entsprechend den Anforderungen gewählt werden. Bei einer relativ kleinen Zahl von Dampfejektoren ist der Volumenstrom je Dampfejektor bei konstantem Gesamtvolumenstrom entsprechend erhöht, was zu entsprechenden Längen der Dampfejektoren und bei ihrer strahlpumpenartigen Ausgestaltung insbesondere von deren Diffusoren führt, so daß sie entsprechend den vorhandenen Platzverhältnissen gegebenenfalls geneigt oder liegend anzuordnen sind. Hierbei können auch Schachtelungen vorgesehen sein.

Ein derartiges Verfahren und ein derartiger Autoklav sind insbesondere zur Trocknung von porösem und vorzugsweise mineralischem Beschickungsgut etwa aus Porenbeton oder Schaumsilikat geeignet.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt schematisch im Querschnitt einen Autoklav mit einer Ausführungsform einer Dampfumwälzung.

Fig. 2 zeigt schematisch im Querschnitt einen Autoklav mit einer weiteren Ausführungsform einer Dampfumwälzung.

Fig. 3 zeigt schematisch eine zusätzliche Ausführungsform einer Dampfumwälzung.

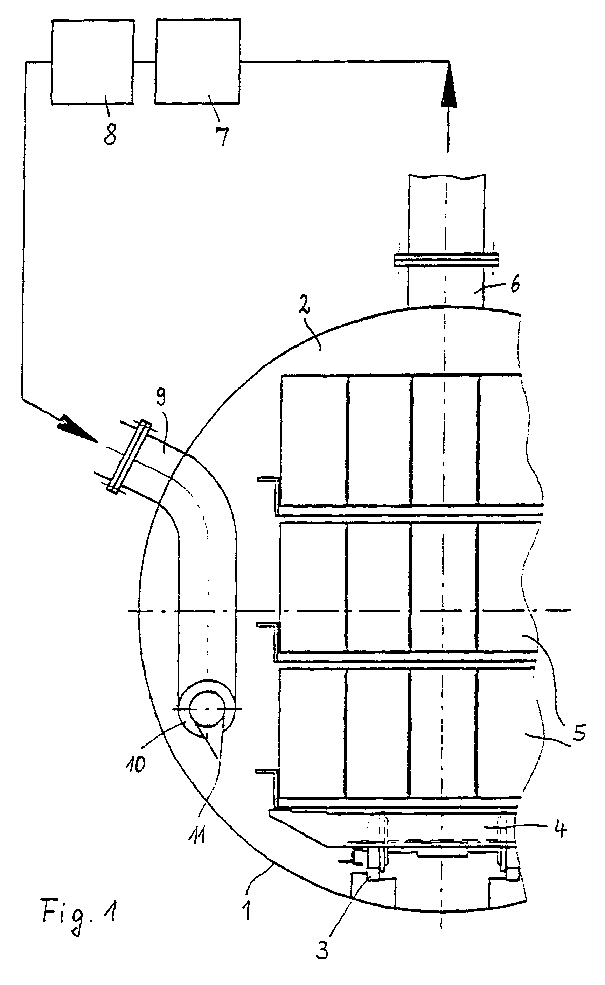

Gemäß Fig. 1 ist ein Autoklav vorgesehen, der einen Autoklavmantel 1 aufweist, der einen im wesentlichen horizontalen, kreiszylindrischen Innenraum 2 umschließt. Der Autoklavmantel 1 ist an einem Ende üblicherweise durch einen Klöpperboden geschlossen, während am anderen Ende, dem Beschickungsende, ein aufklappbarer Deckel vorgesehen ist. Bodenseitig sind Schienen 3 angeordnet, über die bei aufgeklapptem Deckel eine Vielzahl von Wagen 4 mit darauf angeordnetem Beschickungsgut 5 in den Autoklav einfahrbar und aus diesem herausfahrbar sind.

Hierbei ist eine Dampfabführung 6 im Scheitelbereich des Autoklavs vorgesehen, die zu einem Treibdampfverdichter 7 mit vor- oder nachgeschaltetem Wärmetauscher 8 zum Aufdrücken des Wasserdampfdruckes auf ein gegenüber dem im wesentlichen isobaren Niveau im Autoklav höheres Niveau und zur Überhitzung des durchströmenden Wasserdampfes vorgesehen. Der überhitzte und auf einem höheren Druckniveau befindliche, später als Treibdampf dienende Wasserdampf wird über Zuführleitungen 9 in den Autoklav zurückgeführt. Die Zuführleitungen 9 sind über T-Stücke mit sich in Längsrichtung des Autoklavs in dessen seitlichen Krümmungsbereichen und im wesentlichen über dessen Länge erstreckenden Treibdampfleitungen 10 verbunden, die mit im wesentlichen abwärts gerichteten düsenartigen Austrittsöffnungen 11 für Treibdampf versehen sind und so Dampfejektoren bilden. Auf diese Weise saugt der eingedüste Treibdampf Wasserdampf aus der Umgebung an und führt das so gebildete Dampfgemisch bis unter das Beschickungsgut 5.

Die Austrittsöffnungen 11 können von irgendeiner geeigneten Form, beispielsweise rund oder schlitzförmig sich in Längsrichtung des Autoklavs erstreckend sein.

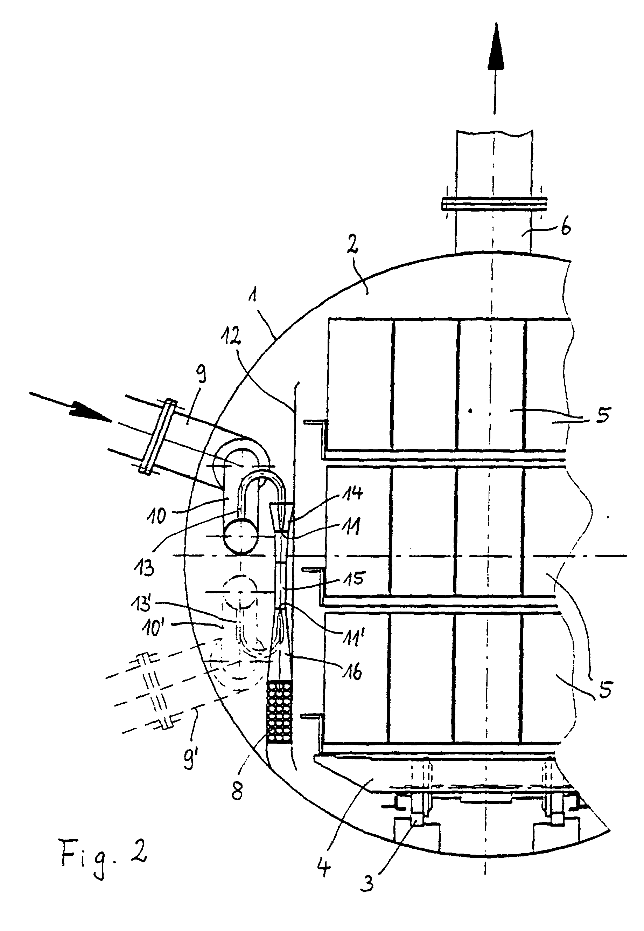

Wie sich aus Fig. 2 ergibt, kann der Wärmetauscher 8 zum überhitzen des Wasserdampfs im Gegensatz zu der Ausführungsform von Fig. 1 auch innerhalb des Autoklavs derart angeordnet sein, daß er von dem aus Treibdampf und Umgebungswasserdampf gebildeten Saugdampfstrom durchströmt wird, bevor letzterer mit dem Beschickungsgut 5 in Kontakt gelangt. Hierbei erstreckt sich jeweils ein Wärmetauscher 8 im jeweiligen seitlichen Krümmungsbereich des Autoklavmantels 1 im wesentlichen über die Länge des Autoklavs.

Um Kurzschlußströmungen zu vermeiden, ist es zweckmäßig, den jeweiligen seitlichen Krümmungsbereich des Autoklavmantels 1 durch ein Abschirmblech 12, das ober- und unterseitig mit Abstand zum Autoklavmantel 1 angeordnet ist, abzuschirmen, so daß der Dampfstrom den das Beschickungsgut 5 aufnehmenden Innenraum 2 infolge der Zwangskonvektion durchströmt; vgl. Fig. 2.

Ferner ist es zweckmäßig, wenn die Dampfejektoren, wie in Fig. 2 dargestellt, strahlpumpenartig ausgebildet sind, wobei die jeweilige, am Ende eines Abzweigrohrs 13 befindliche, düsenartige Austrittsöffnung 11 für den Treibdampf zentral in einem nach oben offenen, sich trichterförmig verengenden Saugrohr 14 mündet, dem sich nach unten ein Mischrohr 15 und danach ein sich zur Dampfaustrittsseite erweiternder Diffusor 16 anschließt. Der Diffusor 16 mündet, wenn der Wärmetauscher 8 im Autoklav angeordnet ist, zweckmäßigerweise über letzterem, wie in Fig. 2 dargestellt ist. Die so strahlpumpenartig ausgebildeten Dampfejektoren sind gleichmäßig über die Länge des Autoklavs verteilt und reihen sich hierbei insbesondere lückenlos über die Länge des Autoklavs aneinander.

Gegebenenfalls kann auch ein Reversierbetrieb vorgesehen sein, indem weitere, jeweils am Ende eines mit einer Zuführleitung 9' verbundenen Abzweigrohrs 13' befindliche, düsenartige Austrittsöffnungen 11' für Treibdampf nach oben gerichtet zentral im Diffusor 16 münden; gestrichelt in Fig. 2 dargestellt. über eine entsprechende Ventilierung kann hierauf zeitweilig umgeschaltet werden, um eine noch homogenere, vertikale Temperaturverteilung im Beschickungsgut 5 zu erzielen. Hierbei ist es zweckmäßig, wenn Saugrohr 14, Mischrohr 15 und Diffusor 16 wenigstens im wesentlichen symmetrisch zu ihrer Mittelebene quer zu ihrer Achse ausgebildet sind.

Der Austrittsquerschnitt der Dampfejektoren kann insbesondere ein Längen- zu Breitenverhältnis größer 10 haben, so daß deren Strömung weitgehend sozusagen zweidimensional gestaltet ist.

Saugrohr 14, Mischrohr 15 und Diffusor 16 können aber auch ein einheitliches Rohr mit gleichbleibendem, rundem oder rechteckigem Querschnitt bilden.

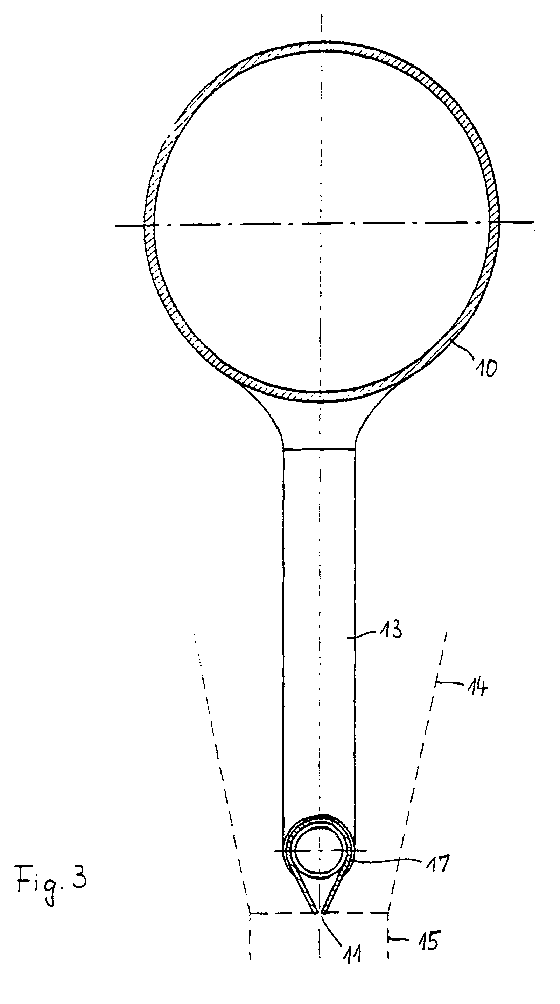

Gemäß Fig. 3 können Saug-, Misch- und Diffusorteil des strahlpumpenartig ausgebildeten Dampfejektors in Längsrichtung des Autoklavs einen einzigen oder mehrere langgestreckte Abschnitte bilden, wobei in dem Saugteil mehrere oder alle in Längsrichtung des Autoklavs angeordnete Austrittsöffnungen 11 münden. Hierzu kann eine Vielzahl von im wesentlichen vertikalen Abzweigrohren 13 am unteren Ende jeweils ein horizontales Verteilerrohr 17 tragen, so daß letztere im wesentlichen die Länge des Autoklavs einnehmen und jeweils mehrere beabstandete Austrittsöffnungen 11 oder eine sich in Längsrichtung des Verteilerrohrs 17 erstreckende, schlitzartige Austrittsöffnung 11 tragen.

Zur möglichst homogenen Verteilung des Dampfstroms kann eine individuelle Regulierung der Dampfejektoren mit Hilfe von Stellventilen zwischen der Treibdampfzufuhr und der bzw. den Austrittsöffnungen 11 erfolgen.

## Patentansprüche

1. Verfahren zum Trocknen von Beschickungsgut (5) während seiner Druckdampfbehandlung in einem Autoklav mit einem von einem Autoklavmantel (1) umschlossenen, im wesentlichen horizontalen kreiszylindrischen, das Beschickungsgut (5) aufnehmenden Innenraum (2), wobei der Wasserdampf innerhalb des Autoklavs umgewälzt und diesem Energie zugeführt wird, während gleichzeitig unter Beibehaltung eines im wesentlichen isobaren Zustandes im Autoklav durch Wasserverdampfung gebildeter Wasserdampf aus dem Autoklav abgeführt wird, **dadurch gekennzeichnet, daß** ein Teil des aus dem Autoklav abgeführten Wasserdampfs aufgedrückt und als Treibdampf in den seitlichen Bereichen bzw. im Sohlenbereich des Innenraums (2) derart eingedüst wird, daß der eingedüste Treibdampf Wasserdampf aus der Umgebung ansaugt und das so gebildete Dampfgemisch bis unter das Beschickungsgut (5) führt.

2. Verfahren nach Anspruch 1, **dadurch gekennzeichnet, daß** der Treibdampf auf ein um etwa 100 bis 900 mbar höheres Druckniveau als das isobare Druckniveau im Autoklav aufgedrückt wird.

3. Verfahren nach Anspruch 1 oder 2, **dadurch gekennzeichnet, daß** der Treibdampf mit einer Geschwindigkeit von etwa 70 bis 200 m/s eingedüst wird.

4. Verfahren nach einem der Ansprüche 1 bis 3, **dadurch gekennzeichnet, daß** der Treibdampfvolumenstrom zum umgewälzten Volumen im Autoklav etwa im Bereich von 1:5 bis 1:20 eingestellt wird.

5. Autoklav zur Druckdampfbehandlung von Beschickungsgut (5) mit einem von einem Autoklavmantel (1) umschlossenen, im wesentlichen horizontalen kreiszylindrischen, das Beschickungsgut (5) aufnehmenden Innenraum (2) und mit einer zur Erzeugung von überhitztem Wasserdampf dienenden Heizeinrichtung (8), **dadurch gekennzeichnet, daß** beidseitig im Autoklav jeweils ein an einen Treibdampfverdichter (7) angeschlossener Dampfejektor mit einer sich im wesentlichen über die Länge des Autoklavs erstreckenden, mit düsenartigen Austrittsöffnungen (11) versehenen Treibdampfleitung (10) vorgesehen ist, wobei der Treibdampfverdichter (7) auf einen solchen Druck ausgelegt und die Dampfejektoren derart angeordnet sind, daß der aus den Austrittsöffnungen (11) austretende Treibdampf Wasserdampf aus der Umgebung ansaugt und das so gebildete Dampfgemisch bis unter das Beschickungsgut (5) führt.

6. Autoklav nach Anspruch 5, **dadurch gekennzeichnet, daß** der Treibdampfverdichter (7) und/oder die Heizeinrichtung (8) außerhalb des Autoklavs angeordnet sind.

7. Autoklav nach Anspruch 5, **dadurch gekennzeichnet, daß** der Treibdampfverdichter (7) und/oder die sich insbesondere über im wesentlichen die gesamte Länge des Autoklavs erstreckende Heizeinrichtung (8) innerhalb des Autoklavs angeordnet sind.

8. Autoklav nach einem der Ansprüche 5 bis 7, **dadurch gekennzeichnet, daß** die Treibdampfleitungen (10) in den seitlichen Bereichen des Innenraums (2) angeordnet sind.

9. Autoklav nach Anspruch 7 oder 8, **dadurch gekennzeichnet, daß** die Dampfejektoren in Strömungsrichtung vor der Heizeinrichtung (8) angeordnet sind.

10. Autoklav nach einem der Ansprüche 5 bis 9, **dadurch gekennzeichnet, daß** die Dampfejektoren strahlpumpenartig ausgebildet sind.

11. Autoklav nach Anspruch 10, **dadurch gekennzeichnet, daß** die Dampfejektoren aus einem Saugrohr (14), in dem mindestens eine Austrittsöffnung (11) mündet, einem sich daran anschließenden Mischrohr (15) und einem Diffusor (16) gebildet wird.

12. Autoklav nach einem der Ansprüche 5 bis 11, **dadurch gekennzeichnet, daß** die Austrittsöffnungen (11) rund oder schlitzförmig sind.

13. Autoklav nach einem der Ansprüche 10 bis 12, **dadurch gekennzeichnet, daß** der Austrittsquerschnitt der Dampfejektoren ein Längen- zu Breitenverhältnis größer 10 hat.

14. Autoklav nach einem der Ansprüche 10 bis 13, **dadurch gekennzeichnet, daß** die Dampfejektoren für einen Reversierbetrieb sowohl auf der Mischrohr- als auch auf der Diffusorseite mit düsenartigen Austrittsöffnungen (11, 11') für Treibstrahlen versehen sind.

## Claims

1. Process for the drying of baten material (5) during its pressurised vapour treatment in an autoclave equipped with an interior chamber (2) of mainly horizontal, circular cylindrical design enclosed by an autoclave shell (1) and receiving the baten material (5), with the water vapour being circulated inside the autoclave and energy added to this vapour while at the same time water vapour formed by water evaporation is discharged from the autoclave with a largely isobaric condition in the autoclave being maintained, **characterised in that** the pressure of part of the water vapour discharged from the autoclave is raised to be injected as motive steam into the lateral areas and/or the bottom area of the interior chamber (2) in such a way that the injected motive steam draws in water vapour from the environment and carries the resulting vapour mixture to below the baten material (5).

2. Process as defined in claim 1, **characterised in that** the pressure of the motive steam is raised to an approx. 100 to 900 mbar higher pressure level than the isobaric pressure level in the autoclave.

3. Process as defined in claim 1 or 2, **characterised in that** the motive steam is injected with a velocity of approx. 70 to 200 m/s.

4. Process as defined in any of the claims 1 to 3, **characterised in that** the ratio of the volumetric motive steam flow to the circulated volume in the autoclave is adjusted in a range of 1:5 to 1:20.

5. Autoclave for pressurised vapour treatment of baten material (5) equipped with an interior chamber (2) of mainly horizontal, circular cylindrical design enclosed by an autoclave shell (1) and receiving the baten material (5) and with a heating system (8) used to produce superheated water vapour, **characterised in that** on both sides of the autoclave a vapour ejector is connected to a motive steam compressor comprising a motive steam pipe (10) that largely extends over the length of the autoclave and is equipped with nozzle-type outlets (11), with the motive steam compressor (7) being designed for such pressure and the vapour ejectors arranged in such a way that the motive steam escaping through the outlets (11) draws in water vapour from the environment and carries the resulting vapour mixture to below the baten material (5).

6. Autoclave as defined in claim 5, **characterised in that** the motive steam compressor (7) and/or the heating system (8) are arranged outside the autoclave.

7. Autoclave as defined in claim 5, **characterised in that** the motive steam compressor (7) and/or the heating system (8) extending in particular over largely the entire length of the autoclave are arranged inside the autoclave.

8. Autoclave as defined in any of the claims 5 to 7, **characterised in that** the motive steam pipes (10) are arranged in the lateral areas of the interior chamber (2).

9. Autoclave as defined in claim 7 or 8, **characterised in that** the vapour ejectors are arranged in flow direction upstream of the heating system (8).

10. Autoclave as defined in any of the claims 5 to 9, **characterised in that** the vapour ejectors are of jet pump type design.

11. Autoclave as defined in claim 10, **characterised in that** the vapour ejectors are composed of a suction pipe (14) where ends at least one outlet (11), followed by a mixing pipe (15) and a diffuser (16).

12. Autoclave as defined in any of the claims 5 to 11, **characterised in that** the outlets (11) are of circular or slit-type design.

13. Autoclave as defined in any of the claims 10 to 12, **characterised in that** the outlet area of the vapour ejectors has a length/width ratio of more than 10.

14. Autoclave as defined in any of the claims 10 to 13, **characterised in that** the vapour ejectors are fitted with nozzle-type outlets (11, 11') for driving jets both on the mixing pipe and diffuser sides to permit reversible operation.

## Revendications

1. Procédé pour le séchage d'une charge (5) pendant son traitement de vapeur sous pression dans une autoclave avec une chambre intérieure (2) recevant la charge (5) ayant une forme principalement horizontale cylindrique circulaire et entourée d'une chemise d'autoclave (1) où la vapeur d'eau circule dans l'autoclave qui reçoit l'énergie pendant que simultanément, tout en conservant un état principalement isobare dans l'autoclave, la vapeur d'eau résultant de l'évaporation de l'eau est évacuée de l'autoclave; **caractérisé par le fait que** la pression d'une partie de la vapeur d'eau évacuée de l'autoclave est augmentée pour être introduite par des buses comme flux de vapeur dans les parties latérales et/ou au fond de la chambre intérieure (2) de telle manière que ce flux de vapeur introduit par buses puisse aspirer la vapeur d'eau de l'environnement et que le mélange de vapeur ainsi obtenu soit amené jusqu'en dessous de la charge (5).

2. Procédé selon la revendication 1 **caractérisé par le fait que** la pression du flux de vapeur soit augmentée à un niveau d'environ 100 à 900 mbars supérieur au niveau de pression isobare dans l'autoclave.

3. Procédé selon les revendications 1 ou 2 **caractérisé par le fait que** le flux de vapeur est introduit dans les buses avec une vitesse d'environ 70 à 200 m/s.

4. Procédé selon une des revendications 1 à 3 **caractérisé par le fait que** le courant volumique du flux de vapeur par rapport au volume circulé dans l'autoclave est réglé dans une plage d'environ 1:5 à 1:20.

5. Autoclave pour le traitement de vapeur sous pression d'une charge (5) avec une chambre intérieure (2) recevant la charge (5) ayant une forme principalement horizontale, cylindrique circulaire et entourée d'une chemise d'autoclave (1) ainsi qu'équipée d'un dispositif de chauffage (8) permettant de produire une vapeur d'eau surchauffée, **caractérisée par le fait que** de chaque côté de l'autoclave on prévoit la connexion d'un éjecteur de vapeur connecté à un compresseur du flux de vapeur (7) et comprenant sur la longueur de l'autoclave un conduit de flux de vapeur (10) doté d'orifices de sortie sous forme de buses (11); le compresseur de flux de vapeur (7) est conçu ce faisant pour une pression appropriée et les éjecteurs de vapeur sont configurés de telle manière que le flux de vapeur quittant les orifices de sortie (11) aspire la vapeur d'eau de l'environnement et que le mélange de vapeur ainsi obtenu soit amené jusqu'en dessous de la charge (5).

6. Autoclave selon la revendication 5 **caractérisée par le fait que** le compresseur de flux de vapeur (7) et/ou le dispositif de chauffage (8) soient configurés à l'extérieur de l'autoclave.

7. Autoclave selon la revendication 5 **caractérisée par le fait que** le compresseur de flux de vapeur (7) et/ou le dispositif de chauffage (8) s'étendant notamment sur la longueur intégrale de l'autoclave soient configurés à l'intérieur de l'autoclave.

8. Autoclave selon une des revendications 5 à 7 **caractérisée par le fait que** les conduits de flux de vapeur (10) soient configurés dans les parties latérales de la chambre intérieure (2).

9. Autoclave selon la revendication 7 ou 8 **caractérisée par le fait que** les éjecteurs de vapeur dans le sens du courant soient configurés en amont du dispositif de chauffage (8).

10. Autoclave selon une des revendications 5 à 9 **caractérisée par le fait que** les éjecteurs de vapeur soient du type pompe à jet.

11. Autoclave selon la revendication 10 **caractérisée par le fait que** les éjecteurs de vapeur soient formés d'un tube d'aspiration (14) dans lequel aboutit au moins un orifice de sortie (11), suivi d'un tube de mélange (15) et d'un diffuseur (16).

12. Autoclave selon une des revendications 5 à 11 **caractérisée par le fait que** les orifices de sortie (11) aient une forme ronde ou en fente.

13. Autoclave selon une des revendications 10 à 12 **caractérisée par le fait que** la section de sortie des éjecteurs de vapeur ait un rapport longueur/largeur supérieur à 10.

14. Autoclave selon une des revendications 10 à 13 **caractérisée par le fait que** les éjecteurs de vapeur soient, pour permettre un mode réversible, dotés d'orifices de sortie (11, 11') pour les flux de vapeur non seulement côté tube de mélange mais aussi côté diffuseur.
